# EUROPÄISCHE PATENTANMELDUNG

(11) **EP 2 221 776 A1**
(43) Veröffentlichungstag der Anmeldung: **25.08.2010**
(21) Anmeldenummer: 10000498.5
(22) Anmeldetag: 20.01.2010
(51) Int. Cl.: G07C 9/00, G06Q 20/00, G06Q 99/00

(54) **Vorrichtung zur Erstellung und Ausgabe eines Identifikationsdokuments und Verfahren zur Kontrolle eines Zugangs zu einem nichtöffentlichen Bereich**

(30) Priorität: 23.02.2009 DE 102009010587
(71) Anmelder: adp Gauselmann GmbH, 32339 Espelkamp (DE)
(72) Erfinder: Berkenbrink, Wilfried, 33604 Bielefeld (DE)

(57) **Zusammenfassung**

1. Vorrichtung zur Erstellung und Ausgabe eines Identifikationsdokuments.
2.1 Bei Zugangskontrollsystemen wird der Zugang von Personen zu bestimmten Zielobjekten bzw. spezifischen Gebäuden oder Bereichen kontrolliert. Der Zugang wird erst nach Ausstellung eines Dokuments ermöglicht. Mit der Neuerung soll ohne personenbezogene Hilfestellung eine Erstellung eines Identifikationsdokuments ermöglicht werden.
2.2 Zu diesem Zweck ist eine Vorrichtung zur Eingabe von Identifikationsdaten vorgesehen, die eine Vorrichtung zur Ausgabe eines Identifikationsdokuments umfasst und mit einer Zugangskontrolleinrichtungen kommuniziert.

## Beschreibung

Die Erfindung bezieht sich auf eine Vorrichtung zur Erstellung und Ausgabe eines Identifikationsdokuments gemäß dem Oberbegriff des Patentanspruchs 1 und einem Verfahren zur Kontrolle eines Zugangs zu einem nichtöffentlichen Bereich gemäß dem Oberbegriff des Verfahrensanspruchs 10.

Aus der DE 692 28 315 T2 ist ein Zugangskontrollsystem bekannt, mit dem der Zugang von Personen zu bestimmten Zielobjekten, spezifischen Gebäuden oder Bereichen innerhalb von Gebäuden kontrolliert wird. So kann es notwendig sein, den Zugang zu derartigen Zielobjekten aus unterschiedlichen Gründen zu kontrollieren, wie beispielsweise um die böswillige Beschädigung oder den Diebstahl von materiellen Ausrüstungen, Daten oder sonstigen Informationen zu verhindern. Zugangskontrollsysteme werden im Allgemeinen mit Personenidentifizierungsvorrichtungen verknüpft und es sind viele derartige Systeme und Vorrichtungen bekannt. Alle weisen jedoch den Nachteil auf, dass entsprechende Dokumente unter Zuhilfenahme von Personal erstellt werden müssen.

Die Aufgabe der vorliegenden Erfindung besteht nunmehr darin, ein Zugangskontrollsystem zu schaffen, dass keine weitere Hilfestellung zur Erstellung eines Identifikationsdokuments bedarf.

Diese Aufgabe wird erfindungsgemäß durch die kennzeichnenden Merkmale des Patentanspruchs 1 sowie den Verfahrensmerkmalen des Patentanspruchs 10 gelöst.

Weitergehende Ausgestaltungen sind den Unteransprüchen entnehmbar.

Die erfindungsgemäße Vorrichtung weist den Vorteil auf, dass ein Besucher an einem Anmeldeterminal seine Anmeldedaten selbsttätig eingibt und daraufhin ein Identifikationsdokument als Besucherausweis ausgefüllt erhält, welches einen maschinenlesbaren Code ausweist. Bei der Anmeldung wird auch die aufzusuchende Zielperson bzw. der Fachbereich oder die Abteilung mitangegeben. Das Anmeldeterminal führt selbsttätig ein Datenabgleich durch und ermittelt, ob die zu besuchende Person berechtigt ist, Besuch zu empfangen. Darüber hinaus wird die Zielperson über eine E-Mail Nachricht, eine SMS-Mitteilung oder eine Sprachmitteilung über den anstehenden Besuch informiert. Beim Verlassen des zugangskontrollierten Bereichs wird das Identifikationsdokument in einer Leseeinrichtung am Anmeldeterminal demselben zugeführt. Somit kann von einer berechtigten Person zu gegebener Zeit geprüft werden, ob sich noch Besucher im zugangskontrollierten Bereich aufhalten.

In einer weiteren vorteilhaften Ausgestaltung weist das Anmeldeterminal eine Leseinrichtung für Dokumente auf. So kann z. B. die Visitenkarte oder der Führerschein einer Dokumentenleseeinrichtung zugeführt werden, die personenbezogene Daten erfasst und selbsttätig in eine Anmeldemaske des Anmeldeterminals überträgt.

Ferner umfasst das Anmeldeterminal einen Näherungssensor. Mit diesem wird erfasst, ob eine Person das Anmeldeterminal benutzen möchte. Von einer Steuereinheit des Anmeldeterminals wird selbsttätig der als Punktmatrixanzeige ausgebildete Monitor zugeschaltet und eine auszufüllende Anmeldemaske angezeigt. In einer vorteilhaften Ausgestaltung steht als Eingabemittel eine der Punktmatrixanzeige zugeordnete, berührungsempfindliche Eingabeeinheit zur Verfügung, z. B. ein Touch-Screen-Panel als Tastatur zugeordnet, so dass der Besucher die entsprechenden Felder der Anmeldemaske durch Berührung ausfüllen kann.

Der von dem Anmeldeterminal ausgegebene Besucherausweis ist mit einem maschinenlesbaren Code ausgestattet, so dass mit diesem weitere Zugangskontrolleinrichtungen passiert werden können. Das Identifikationsdokument weist zum einen einen Barcode auf und zum anderen kann es mit einem RFID Element ausgestattet sein.

Ein Ausführungsbeispiel der Erfindung wird unter Bezugnahme auf die begleitenden Zeichnungen beschrieben. Es zeigt:
- Figur 1:: ein Anmeldeterminal, perspektivisch dargestellt und
- Figur 2:: ein Blockschaltbild mit den wesentlichen Baugruppen der erfindungsgemäßen Vorrichtung zur Durchführung des erfindungsgemäßen Verfahrens.

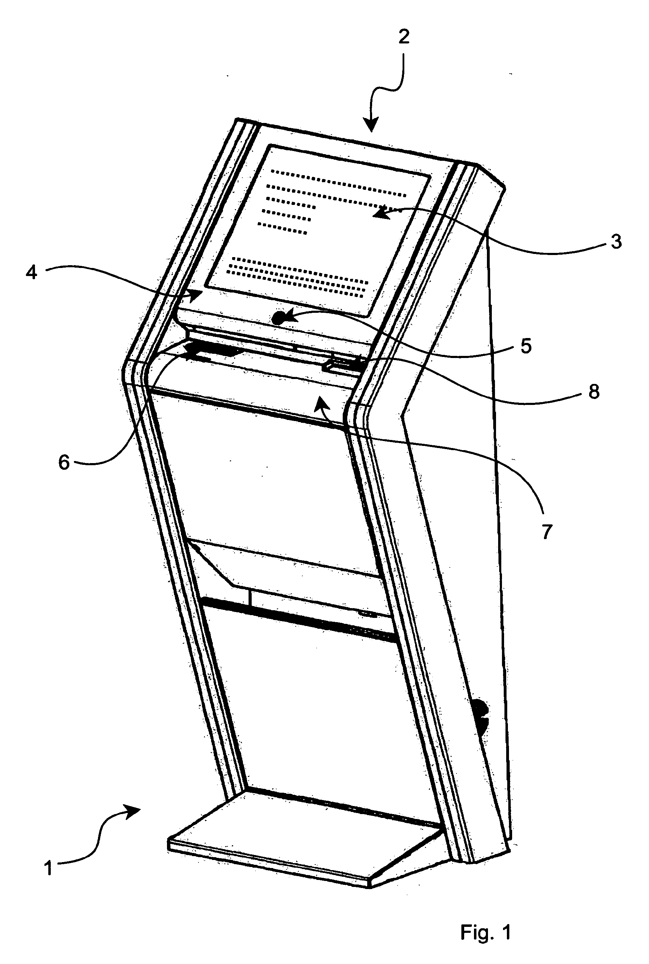

Ein mit 1 gekennzeichnetes Anmeldeterminal in der Figur 1 umfasst ein aus der Senkrechten geneigtes, als Punktmatrixanzeige ausgebildetes Anzeigemittel 2 mit einer berührungsempfindlichen Oberfläche 3 (Touch-Screen). Eine Ansteuerung des Anzeigemittels 2 erfolgt von einer nicht näher dargestellten Steuereinheit. Die berührungsempfindliche Oberfläche 3 ist gleichfalls unter Vermittlung eines Steuermoduls mit der Steuereinheit verbunden. In einem unteren Rahmenbereich 4 des Anzeigemittels 2 ist ein Näherungssensor 5 angebracht. Der Näherungssensor 5 und eine Barcode-Leseeinrichtung 6, die im Bereich eines Auflagepults 7 unterhalb des Rahmenbereichs 4 des Anzeigemittels 2 angeordnet sind, sind mit der Steuereinheit verbunden. Im Bereich der Barcode-Leseeinrichtung 6 weist das Auflagepult 7 eine schlitzförmige Öffnung 8 auf, der innenseitig des Gehäuses des Anmeldeterminals 1 eine Vorrichtung 9 zum Bedrucken eines Papiersstreifens bzw. einer Ausweiskarte zugeordnet ist.

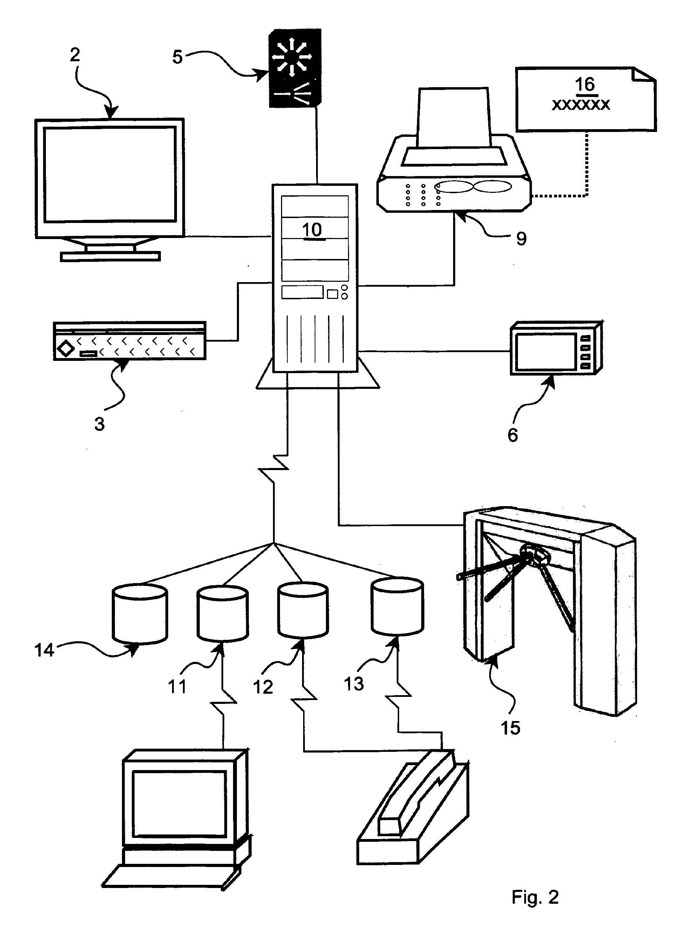

In der Figur 2 sind die wesentlichen Baugruppen der Vorrichtung nach Figur 1, sowie die für das Verfahren erforderlichen Baugruppen als Blockschaltbild dargestellt. An einer Steuereinheit 10 sind Peripheriegeräte wie eine Punktmatrixanzeigevorrichtung 2, eine Eingabevorrichtung in Form einer berührungsempfindlichen Oberfläche 3, ein Druckwerk 9, eine Barcode-Leseeinheit 6 und eine Einrichtung zur Entgegennahme von Daten von einem Personalausweis, Führerschein oder einer Visitenkarte vorgesehen. Des Weiteren ist ein Näherungssensor 5 an der Steuereinheit 10 angeschlossen. Die Steuereinheit 10 korrespondiert mit einem E-Mail-Server 11, einem SMS-Server 12 oder einem Server zur Übermittlung von Sprachmitteilungen 13. Des Weiteren besteht zwischen der Steuereinheit 10 und einer z. B. firmenbezogenen Telefondatenbank 14 und einer Steuereinrichtung 15 für die Zugangskontrollsysteme eine Verbindung.

Nähert sich eine Person dem Anmeldeterminal 1 gemäß Figur 1, so erkennt der im Rahmenbereich 4 befindliche Näherungssensor 5 das eine Person vor dem Anmeldeterminal 1 steht. Das Ausgangssignal des Näherungssensors 5 wird der Steuereinheit zugeführt. Die Steuereinheit aktiviert daraufhin das Anzeigemittel 2, 3. Mit dem Anzeigemittel 2 wird eine Maske zur Erfassung von personenindividuellen Daten angezeigt. Gleichzeitig wird in einem Bereich, des als Punktmatrixanzeige ausgebildeten Anzeigemittels 2, eine übliche PC-Tastatur abgebildet. Durch Berührung der berührungsempfindlichen Oberfläche 3, die dem Anzeigemittel 2 zugeordnet ist, erfolgt die Eingabe der entsprechenden Zeichen in das ausgewählte Maskenfeld. Nach Eingabe der Identifikationsdaten und einer Eingabebestätigung wird ein Besucherausweis erstellt. Die Steuereinheit 10 aktiviert ein Druckwerk 9. In dem Druckwerk werden Karten bzw. Papierstreifen bedruckt, die nachfolgend ausgegeben werden. Auf dem Identifikationsdokument ist der Name des Besuchers, Tag und die Uhrzeit, wie auch der Name der Person, die besucht werden soll und deren Abteilungsbezeichnung aufgeführt. Darüber hinaus ist das Identifikationsdokument mit maschinenlesbaren, alphanumerischen Daten bzw. einem Barcode versehen.

Die Zugangskontrolleinrichtungen 15, wie z. B. Drehkreuz oder Tür, weisen eine nicht näher dargestellte Leseeinrichtung auf, denen das Identifikationsdokument zugeführt wird.

Die Leseeinrichtung 6 des Anmeldeterminals ist derart ausgebildet, dass auch die Entgegennahme einer Visitenkarte, Personalausweis oder Führerschein möglich ist. Von diesen Dokumenten werden die personenbezogenen Daten erfasst und selbsttätig von der Steuereinheit 10 in die entsprechenden Felder der Anmeldemaske übertragen. Nachdem vom Besucher der Name der Zielperson bzw. die Abteilungsbezeichnung eingegeben wird, führt die Steuereinheit 10, in Verbindung mit z. B. der Telefondatenbank 14, eine Plausibilitätsprüfung durch. Es wird geprüft, ob die Person im Unternehmen und in der ausgewählten Fachabteilung tätig ist. Nach einer erfolgreichen verifizierung der Daten wird das Druckwerk 9 von der Steuereinheit 10 aktiviert, der Besucherausweis 16 erstellt und ausgegeben. Gleichzeitig wird die Steuereinheit 10 über einen E-Mail-Server, einen SMS-Server oder einen Sprachmitteilungs-Server die Zielperson über einen anstehenden Besuch informieren. Gleichfalls wird die Steuereinheit 10 der Steuereinrichtung 15 für die zugangseinrichtungen den gerade vergebenen Zugangscode übermitteln, so dass der Besucher nur die für ihn relevanten Zugangskontrolleinrichtungen öffnen kann. Der Inhaber des Identifikationsdokuments 16 führt dieses beim Verlassen des nichtöffentlichen Bereichs einer Leseeinrichtung 6 des Anmeldeterminals 1 zu, damit der Zeitpunkt des Verlassens des nichtöffentlichen Bereichs erfasst wird.

## Patentansprüche

1. Vorrichtung zur Erstellung und Ausgabe eines Identifikationsdokuments,
**dadurch gekennzeichnet,**
**dass** die Vorrichtung (1) Mittel umfasst zur Eingabe von Identifikationsdaten (3), Anzeige (2) von erfassten Identifikationsdaten, Ausgabe eines Identifikationsdokuments (9) und zur Annahme von Identifikationsdokumenten (6), sowie eine Steuereinheit (10) zur Aktivierung der Mittel (2, 3, 6, 9).

2. Vorrichtung nach Anspruch 1,
**dadurch gekennzeichnet,**
**dass** die Vorrichtung (1) einen Näherungssensor (5) umfasst, der mit der Steuereinheit (10) in Verbindung steht und dass die Steuereinheit (10) das als Punktmatrixanzeige ausgebildete Anzeigemittel (2) zur Anzeige von Identifikationsdaten mittels einer Datenerfassungsmaske aktiviert.

3. Vorrichtung nach Anspruch 1 und/oder 2,
**dadurch gekennzeichnet,**
**dass** dem Anzeigemittel (2) eine berührungsempfindliche Oberfläche (Touch-Screen) (3) zugeordnet ist.

4. Vorrichtung nach einem oder mehreren der vorangegangenen Ansprüche,
**dadurch gekennzeichnet,**
**dass** das Mittel zur Ausgabe der Identifikationsdaten ein Druckwerk (9) ist, mit dem einzeln zuführbare Karten oder Papierstreifen mit alphanumerischen Daten und/oder einen Barcode bedruckbar sind.

5. Vorrichtung nach Anspruch 4,
**dadurch gekennzeichnet,**
**dass** die Karte dem Druckwerk (9) einzeln zugeführt wird oder dass das zu bedruckende Material als Endlosstreifen dem Drucker (9) zugeführt wird, wobei das Druckwerk ein Schneidwerk zur Durchtrennung des Endlosstreifens umfasst.

6. Vorrichtung nach Anspruch 5,
**dadurch gekennzeichnet,**
**dass** mit der als Identifikationsdokument ausgegebenen Karte eine Zugangskontrolleinrichtung (15), wie z. B. Drehkreuz oder Tür, betätigt werden kann.

7. Vorrichtung nach Anspruch 1,
**dadurch gekennzeichnet,**
**dass** die Steuereinheit (10) mit mindestens einem Datenserver (14) verbunden ist und dass die Zieldaten auf Plausibilität geprüft werden.

8. Vorrichtung nach einem oder mehreren der vorangegangenen Ansprüche,
**dadurch gekennzeichnet,**
**dass** die Steuereinheit (10) nach Ausgabe der Karte, eine vorabgefasste Textnachricht oder Sprachmitteilung an einen der Kommunikations-Server (11 - 13) übermittelt, damit eine Zielperson von dem Besuch unterrichtet wird.

9. Vorrichtung nach einem oder mehreren der vorangegangenen Ansprüche,
**dadurch gekennzeichnet,**
**dass** mit dem Mittel zur Annahme (6) des Identifikationsdokuments personenspezifische Daten von einer Visitenkarte, einem Personalausweis oder Führerschein entnommen werden und diese Personaldaten in den entsprechenden Feldern der Datenmaske erfasst werden.

10. Verfahren zur Kontrolle eines Zugangs zu einem nichtöffentlichen Bereichs,
**dadurch gekennzeichnet,**
**dass** die Daten der Zugangsperson an einen Anmeldeterminal erfasst und hinterlegt werden, ein Identifikationsdokument anhand der erfassten Daten erstellt und ausgegeben wird und dass ein maschinenlesbarer Code auf dem auszugebenden Identifikationsdokument aufgebracht wird.

11. Verfahren nach Anspruch 10,
**dadurch gekennzeichnet,**
**dass** mit dem Identifikationsdokument eine zugangskontrolleinrichtung (15) passiert werden kann.

12. Verfahren nach Anspruch 10,
**dadurch gekennzeichnet,**
**dass** nach einer Eingabebestätigung der Identifikationsdaten die Daten der Zielperson in einer Datenbank (14) auf Plausibilität geprüft werden und dass bei keiner Beanstandung die Zielperson über den anstehenden persönlichen Kontakt mit einer selbstständig von einem Kommunikations-Server (11 - 13) generierten Nachricht unterrichtet wird.

13. Verfahren nach einem oder mehreren der vorangegangenen Verfahrensansprüche,
**dadurch gekennzeichnet,**
**dass** eine Besucherabmeldung durch Zuführung des Identifikationsdokuments an einer Leseeinheit (6) des Anmeldeterminals erfolgt.

14. Verfahren nach einem oder mehreren der vorangegangenen Verfahrensansprüche,
**dadurch gekennzeichnet,**
**dass** ein vorgegebenes Identifikationsdokument der Leseeinrichtung (6) am Anmeldeterminal (1) zugeführt wird, damit ermittelt wird, welche Person sich noch im nichtöffentlichen, überwachten Bereich befindet.
